# FASCICULE DE BREVET EUROPEEN

(11) **EP 1 364 267 B1**
(45) Date de publication et mention de la délivrance du brevet: **17.10.2007**
(21) Numéro de dépôt: 02704856.0
(22) Date de dépôt: 18.02.2002
(51) Int. Cl.: G05G 1/14

(54) **REPOSE-PIED POUR VEHICULE AUTOMOBILE**
FUSSSTÜTZE FÜR EIN KRAFTFAHRZEUG
FOOTREST FOR MOTOR VEHICLE

(30) Priorité: 19.02.2001 FR 0102218
(43) Date de publication de la demande: 26.11.2003
(73) Titulaire: Peugeot Citroen Automobiles SA, 92200 Neuilly sur Seine (FR); Delphi Technologies, Inc., Shelby, MI 48316 (US)
(72) Inventeur: SAUVONNET, Franck, F-94120 Fontenay sous Bois (FR); ORR, Brian, N., Chesterfield Twp., MI 48051 (US); GMUROWSKI, Waldemar, W., Sterling Heights, MI 48312 (US)
(74) Mandataire: Gicquel, Olivier Yves Gérard
(86) Numéro de dépôt international: PCT/FR2002/000606
(87) Numéro de publication internationale: WO 2002/067073

(56) Documents cités:
- DE-A- 19 916 812
- GB-A- 1 278 919
- US-A- 3 059 960

## Description

La présente invention concerne un repose-pied ajustable lié à une structure de plancher.

Elle se rapporte plus particulièrement à un repose-pied ajustable lié au plancher d'un véhicule, notamment d'un véhicule automobile, comportant un bâti dont au moins une face, destinée à recevoir le pied d'un conducteur, est inclinée vers l'avant du véhicule et à l'arrière de laquelle est fixé un mécanisme de déplacement de cette face lui-même fixé au plancher.

Il est connu d'implanter des pédaliers ajustables dans les véhicules automobiles et certains sont actuellement utilisés sur les véhicules équipés de boite de vitesse automatique. Le terme « ajustable » signifie que tout ou partie du pédalier est susceptible d'être rapproché ou éloigné du siège du conducteur dans le sens de la longueur du véhicule de sorte qu'il est possible d'adapter la position d'au moins une partie du pédalier par rapport au siège du conducteur et donc à sa taille.

En particulier, il est connu des repose-pied ajustables sur lesquels le pied gauche du conducteur est destiné à venir se poser. Ces repose-pied sont susceptibles de venir translater selon l'axe longitudinal du véhicule automobile de manière à adopter la position désirée par le conducteur. Ainsi, il est connu des repose-pied liés au plancher d'un véhicule, notamment d'un véhicule automobile, comportant un bâti dont au moins une face, destinée à recevoir le pied d'un conducteur, est inclinée vers l'avant du véhicule et à l'arrière de laquelle est fixé un mécanisme de déplacement de cette face lui-même fixé au plancher. A titre d'exemple, l'art antérieur connaît le document D₁-US-A-3 059960 qui propose un mécanisme de déplacement linéaire d'un repose-pied selon l'axe du véhicule.

Ces repose-pieds ajustables actuellement connus, ne donnent pas entière satisfaction car ils n'autorisent pas une posture convenable pour la jambe libre du conducteur qui n'exerce pas d'effort sur la pédale d'accélérateur.

Le but de l'invention est alors de proposer un repose-pied ajustable du type mentionné en préambule qui permette d'assurer au conducteur d'un véhicule automobile une posture convenable de sa jambe libre et ce quelle que soit sa taille, pour ce faire, l'invention a pour objet un repose-pied ajustable lié au plancher d'un véhicule, notamment d'un véhicule automobile, comportant un bâti dont au moins une face, destinée à recevoir le pied d'un conducteur, est inclinée vers l'avant du véhicule et à l'arrière de laquelle est fixé un mécanisme de déplacement de cette face lui-même fixé au plancher le mécanisme étant un mécanisme de déplacement linéaire selon l'axe du véhicule, caractérisé en ce que le mécanisme est constitué d'une glissière et d'un réducteur d'angle adapté pour déplacer la partie femelle de la glissière. Le moteur du mécanisme est fixé à la partie mâle de la glissière,elle-même étant fixée au plancher du véhicule.

De préférence, la partie terminale de l'arbre de sortie du réducteur d'angle est une vis sans fin adaptée pour transmettre le mouvement rotatif à un écrou lié à la partie femelle de la glissière.

L'invention concerne également un véhicule automobile comportant un repose-pied tel qu'il vient d'être décrit.

D'autres avantages et caractéristiques de l'invention ressortiront mieux à la lecture de la description détaillée faite en référence aux figures suivantes :

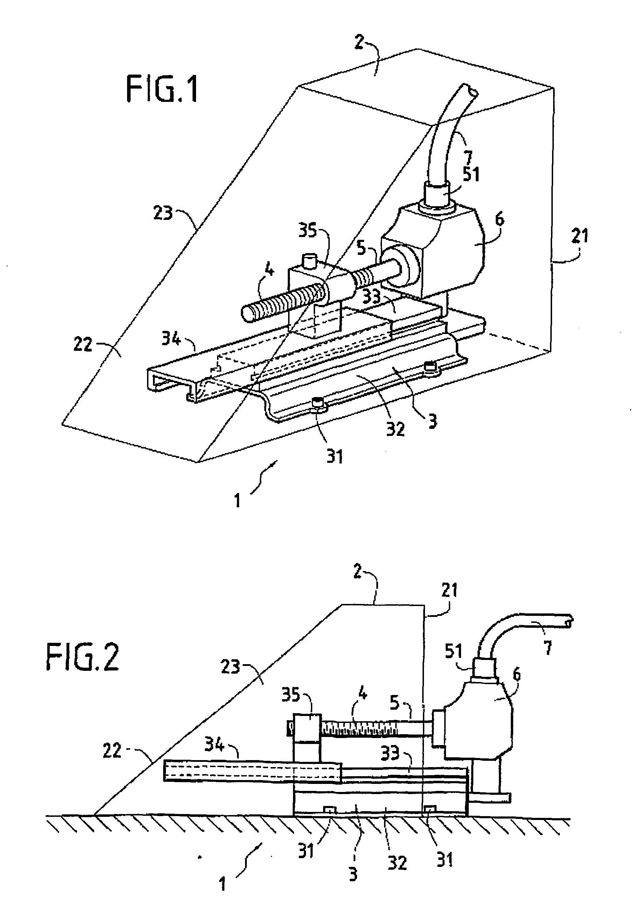

- figure 1a: une vue en perspective du repose-pied selon l'invention implanté dans un véhicule automobile dans sa position extrême repliée ;
- figure 1b: une vue en coupe longitudinale du repose-pied selon l'invention implanté dans le même véhicule dans sa position extrême dépliée.

La figure la montre un repose-pied 1 conforme à l'invention. Ce repose-pied ajustable 1 comprend un bâti 2 fixé à la partie non représentée du tablier et constitué d'une partie parallèlépipédique 21 oriéntée vers l'habitacle du véhicule et le plancher de celui-ci et d'une autre partie 22 comprenant un pan incliné 23 qui repose sur le plancher du véhicule non représenté.

Ce pan 23 incliné vers l'avant du véhicule est destiné à recevoir le pied d'un conducteur n'exerçant pas d'effort sur la pédale de débrayage. A l'arrière de ce pan 23 est disposé un mécanisme de déplacement linéaire 3 selon l'axe longitudinal du véhicule automobile lui-même fixé au plancher par l'intermédiaire de vis 31.

Ce mécanisme 3 comporte une pièce support 32 dont la partie supérieure est usinée de manière à constituer la partie mâle 33 d'une glissière sur laquelle la partie femelle 34 de forme conjuguée est susceptible de venir coulisser.

Une extrémité de la partie femelle 34 de la glissière est fixée au pan 23. A son extrémité opposée est soudé un écrou 35 dans lequel une vis sans fin 4 constituant la partie terminale d'un arbre de sortie 5 d'un réducteur d'angle 6 vient coulisser de manière à transmettre le mouvement rotatif à un écrou 35 lié à la partie femelle 34 de la glissière.

Le réducteur d'angle 6 est commandé par un moteur électrique non représenté par l'intermédiaire d'un câble de transmission 7 connecté à la prise d'entrée 51.

Le fonctionnement du dispositif qui vient d'être décrit est le suivant.

Lorsque le conducteur du véhicule désire avancer ou reculer le repose-pied 1 par rapport à son siège de manière à optimiser sa posture, il effectue de manière connue en soi, par exemple par l'intermédiaire d'un bouton de réglage la mise en marche du moteur 5.

L'arbre 6 est alors mis en rotation dans un sens ou l'autre et provoque le coulissement de l'écrou 7 et celui de la partie femelle 34 de la glissière dans sa partie mâle 33 et donc la translation du bâti 2.

L'invention permet ainsi de prévoir de manière satisfaisante un repose-pied ajustable en fonction de la taille du conducteur, ce qui lui permet d'avoir une bonne posture en position de conduite, cette posture étant le cas échéant améliorée avec le déplacement du siège et l'inclinaison de son dossier, et du volant.

## Revendications

1. Repose-pied (1) ajustable lié au plancher d'un véhicule, notamment d'un véhicule automobile, comportant un bâti (2) dont au moins une face (23), destinée à recevoir le pied d'un conducteur, est inclinée vers l'avant du véhicule et à l'arrière de laquelle est fixé un mécanisme de déplacement de cette face lui-même fixé au plancher, le mécanisme étant (3) un mécanisme de déplacement linéaire selon l'axe du véhicule, **caractérisé en ce que** le mécanisme est constitué d'une glissière (32) et d'un réducteur d'angle (6) adapté pour déplacer la partie femelle (34) de la glissière, le réducteur d'angle (6) étant fixé à la partie mâle (33) de la glissière, elle-même étant fixée au plancher du véhicule.

2. Repose-pied selon la revendication 1, **caractérisé en ce que** la partie terminale (4) de l'arbre de sortie du réducteur (6) est une vis sans fin adaptée pour transmettre le mouvement rotatif à un écrou (35) lié à la partie femelle de la glissière.

3. Véhicule automobile comportant un repose-pied selon l'une quelconque des revendications précédentes.

## Claims

1. Adjustable footrest (1), fastened to the floor of a vehicle, particularly a motor vehicle, comprising a frame (2) of which at least one face (23), intended for receiving a driver's foot, is inclined towards the front of the vehicle and at the rear of which a mechanism for moving this face is fastened, which mechanism is fastened to the floor, the mechanism (3) being a mechanism for linear movement along the vehicle's centre-line, **characterised in that** the mechanism is made up of a slide (32) and an angle reducer (6) adapted to move the female part (34) of the slide, the angle reducer (6) being fastened to the male part (33) of the slide, this itself being fastened to the vehicle floor.

2. Footrest according to Claim 1, **characterized in that** the end part (4) of the output shaft of the reducer (6) is an endless screw adapted to transmit rotary movement to a nut (35) fastened to the female part of the slide.

3. Motor vehicle including a footrest according to either of the preceding claims.

## Patentansprüche

1. Fußablage (1), die einstellbar mit dem Boden eines Fahrzeugs, insbesondere eines Kraftfahrzeugs verbunden ist, die einen Aufbau (2) aufweist, von dem mindestens eine Seite (23), die dazu bestimmt ist, den Fuß eines Fahrers aufzunehmen, zur Vorderseite des Fahrzeugs geneigt ist, und an deren Rückseite ein Mechanismus befestigt ist, um diese Seite zu verschieben, der selbst an dem Boden befestigt ist, wobei der Mechanismus (3) ein linearer Verschiebungsmechanismus entlang der Fahrzeugachse ist, **dadurch gekennzeichnet, dass** der Mechanismus aus einer Gleitschiene (32) und einem Winkelgetriebe (6) besteht, das den Buchsenteil (34) der Gleitschiene verschieben kann, wobei das Winkelgetriebe (6) an dem Steckteil (33) der Gleitschiene befestigt ist, die selbst an dem Boden des Fahrzeugs befestigt ist.

2. Fußablage nach Anspruch 1, **dadurch gekennzeichnet, dass** der Endteil (4) der Ausgangswelle des Getriebes (6) eine Schnecke ist, die die Drehbewegung auf eine Mutter (35) übertragen kann, die mit dem Buchsenteil der Gleitschiene verbunden ist.

3. Kraftfahrzeug mit einer Fußablage nach einem der vorhergehenden Ansprüche.
